# FASCICULE DE BREVET EUROPEEN

(11) **EP 1 064 841 B1**
(45) Date de publication et mention de la délivrance du brevet: **01.10.2003**
(21) Numéro de dépôt: 00440188.1
(22) Date de dépôt: 21.06.2000
(51) Int. Cl.: A01G 27/04

(54) **Dispositif de bac à fleurs à réserve d'eau.**
Blumentopfeinrichtung mit Wasservorrat
Plant container assembly with water reservoir

(30) Priorité: 28.06.1999 FR 9908351
(43) Date de publication de la demande: 03.01.2001
(73) Titulaire: Grigi, Bernard, 39570 Geruge (FR)
(72) Inventeur: Grigi, Bernard, 39570 Geruge (FR)
(74) Mandataire: Rhein, Alain

(56) Documents cités:
- EP-A- 0 812 534
- DE-A- 3 740 100
- GB-A- 863 177
- US-A- 4 109 415

## Description

La présente invention a pour objet un dispositif de bac à fleurs à réserve d'eau comportant, d'une part, un premier bac destiné à contenir de l'eau et, d'autre part, un second bac destiné à contenir de la terre et disposé au-dessus et à une certaine distance du niveau d'eau dans le premier bac, ce dernier comportant, dans sa partie supérieure orientée en direction du second bac, des moyens d'accrochage destinés à coopérer avec des moyens d'accrochage complémentaires que présente ledit second bac au niveau de sa partie inférieure, tandis qu'une mèche s'étend dans la terre du second bac par l'une de ses extrémités, l'autre extrémité plongeant dans l'eau du premier bac.

Cette invention concerne le domaine de la fabrication des jardinières, pots et bacs destinés à contenir des plantes, notamment des fleurs ou analogues. De telles jardinières ou analogues sont réalisées, usuellement, en matière synthétique, ceci par une technique de moulage ou autre.

L'on connaît, d'ores et déjà, de nombreux dispositifs de bacs à fleurs à réserve d'eau correspondant à la description ci-dessus.

Dans la plupart des cas, de tels dispositifs adoptent la forme d'un premier bac destiné à contenir de l'eau et à l'intérieur duquel vient se positionner, notamment par emboîtement, un second bac destiné à contenir de la terre.

Ce second bac vient alors reposer, selon le cas, sur un épaulement que présente la paroi interne du premier bac ou, encore, sur le rebord supérieur de ce dernier.

De tels dispositifs présentent, en fait, un certain nombre d'inconvénients.

Ainsi, lorsqu'il s'agit de réaliser un apport d'eau dans le premier bac, il est nécessaire, au préalable, de procéder au retrait du bac à terre de manière à pouvoir accéder au volume interne du bac à eau.

On observera, également, que l'emboîtement du second bac à l'intérieur du premier ne permet, aucunement, de distinguer la hauteur du niveau d'eau dans le premier bac et, par conséquent, de choisir le moment opportun pour réaliser un apport d'eau.

Dans certains dispositifs du type emboîté, il est ménagé, entre les parois des premier et second bacs, un canal permettant le versement de l'eau sans retirer le bac à terre. Dans un pareil cas, il est fréquent que ce dernier se retrouve, en partie, immergé dans l'eau du premier bac. Cette eau pénètre, alors, à l'intérieur du second bac et vient humidifier la terre de sorte que les nutriments que contient cette dernière se trouvent dilués dans la réserve d'eau. De plus, la présence continuelle de cette eau dans le bac à terre a pour conséquence d'entraîner le pourrissement des plantes.

On observera, également, que, pour assurer une bonne croissance de ces dernières, il convient d'oxygéner la terre contenue dans le second bac. Une telle oxygénation se fait par une circulation d'air s'écoulant au travers, d'une part, d'un orifice que comporte le fond du second bac et, d'autre part, d'un espacement existant entre le niveau d'eau et le second bac. Lorsque ce dernier est immergé dans l'eau du premier bac, une telle circulation d'air est impossible.

Il a été remédié, partiellement, à ces problèmes en équipant la paroi du premier bac d'un élément transparent permettant de contrôler le niveau d'eau et, donc, de s'assurer, d'une part, de la présence d'eau et, d'autre part, que le second bac n'est pas immergé dans le premier. A ce propos, on observera que ce premier bac contient une faible quantité d'eau de sorte qu'il est indispensable d'assurer un contrôle constant du niveau de celle-ci. De plus, un tel élément transparent, en contact avec un milieu liquide contenant des organismes vivants, à tendance à s'encrasser ce qui le rend opaque et, par conséquent, inopérant.

Une autre solution consiste à ménager un certain nombre d'orifices au niveau de la paroi du bac à eau, à une certaine distance du fond du bac à terre, ce qui permet de définir, en quelque sorte, un trop plein. A ce propos, on observera que ces orifices sont, généralement, de petite taille de sorte qu'ils se bouchent rapidement et empêchent, notamment, la circulation d'air et/ou l'évacuation de l'eau excédentaire.

Il convient, en outre, de remarquer que les dispositifs de bacs à fleurs décrits ci-dessus sont, dans la plupart des cas, destinés à être disposés sur un support ou à même le sol, ces dispositifs n'étant, par conséquent, aucunement conçus aptes à être suspendus.

Il existe, cependant, un certain nombre de dispositifs de bacs à fleurs suspendus adoptant, usuellement, la forme d'un bac à terre susceptible de venir reposer sur le fond d'une coupelle ou analogue, cette dernière, d'une part, définissant un bac à eau et, d'autre part, étant complétée par un système destiné à permettre la suspension de l'ensemble à un support.

On remarquera, dans un pareil cas, que le fond du bac à terre est, là encore, en partie, immergé dans l'eau contenue dans le premier bac.

L'on connaît, encore, au travers du document EP-0.812.534 un dispositif de bac à fleurs comportant un premier bac destiné à contenir de l'eau ainsi qu'un second bac destiné à contenir de la terre. Ce second bac est, d'une part, suspendu à un support par l'intermédiaire de câbles métalliques et, d'autre part, disposé au dessus et à une certaine distance du niveau d'eau dans le premier bac. En fait, ce bac à terre comporte, dans sa partie inférieure, un premier orifice traversé par au moins une mèche s'étendant, d'une part, dans l'eau du premier bac et, d'autre part, dans la terre du second bac. Ce bac à terre comporte, encore, au niveau de son extrémité inférieure au moins une paire d'orifices destinés à être traversés par une tige métallique horizontale apte à traverser une paire d'orifices ménagés au niveau de la partie supérieure du bac à eau en vue de réaliser la suspension de ce dernier sous ledit bac à terre.

La présente invention permet de remédier aux inconvénients des bacs à fleurs de l'état de la technique au travers d'un dispositif nouveau et inventif permettant au bac à terre de venir reposer sur le bac à eau ou, à l'inverse, à ce dernier de venir s'accrocher sous ledit bac à terre.

A cet effet, la présente invention concerne un dispositif de bac à fleurs à réserve d'eau comportant, d'une part, un premier bac destiné à contenir de l'eau et, d'autre part, un second bac destiné à contenir de la terre et disposé au-dessus et à une certaine distance du niveau d'eau dans le premier bac, ce dernier comportant, dans sa partie supérieure orientée en direction du second bac, des moyens d'accrochage destinés à coopérer avec des moyens d'accrochage complémentaires que présente ledit second bac au niveau de sa partie inférieure, tandis qu'une mèche s'étend dans la terre du second bac par l'une de ses extrémités, l'autre extrémité plongeant dans l'eau du premier bac, caractérisé par le fait que lesdits moyens d'accrochage adoptent la forme d'au moins un crochet d'accrochage équipant le premier bac, notamment au niveau de son bord supérieur, tandis que les moyens d'accrochage complémentaires sont définis par au moins une lumière ou analogue ménagée au niveau du fond dudit second bac.

Selon une autre caractéristique de la présente invention, le niveau d'eau du premier bac est défini par le bord supérieur de ce dernier, ce bord supérieur étant disposé à une certaine distance du second bac.

Selon une autre caractéristique, le crochet d'accrochage est pourvu, à proximité de son extrémité supérieure, d'un dispositif formant redan destiné à coopérer avec le coté interne de la bordure d'une lumière en vue d'empêcher le retrait dudit crochet d'accrochage hors de cette dernière.

Une caractéristique additionnelle consiste en ce que ledit crochet d'accrochage se situe, sensiblement, dans le prolongement de la paroi latérale du bac à eau à partir de laquelle il s'étend et comporte une section sensiblement droite prolongée par une portion recourbée vers l'extérieur du bac à eau.

En fait, la section sensiblement droite présente un décrochement interne apte à définir une surface d'appui destinée à coopérer avec le coté externe de la bordure d'une lumière en vue d'autoriser le bac à terre à venir reposer sur le bac à eau.

Selon une autre caractéristique de la présente invention, ladite lumière est définie, selon le cas, soit directement lors de la fabrication dudit bac à terre, soit par un opercule ménagé au niveau du fond du bac à terre, ledit opercule étant de type escamotable et ayant été indexé, fragilisé et/ou prédécoupé.

Une caractéristique additionnelle concerne le fait que ledit bac à terre présente, au niveau de son fond, une cheminée faisant saillie vers l'intérieur dudit bac à terre et dont la paroi périphérique est percée d'au moins une ouverture pour le passage de la mèche.

La ou les ouvertures de ladite cheminée sont pratiquées à une certaine hauteur par rapport au fond dudit bac à terre de manière à définir, au niveau de ce dernier, un bac de rétention d'eau.

Finalement, le bac à terre est délimité par une paroi latérale, s'étendant à partir du fond du second bac, et présentant, dans sa partie inférieure, un décrochement externe apte à définir un épaulement au niveau duquel sont ménagés les moyens d'accrochage complémentaires.

Les avantages de la présente invention consistent en ce qu'il est possible de suspendre, par l'intermédiaire de moyens appropriés et après un support, le bac à terre, ce dernier étant pourvu de moyens permettant l'accrochage, par le dessous, d'un bac définissant une réserve d'eau.

Ce dispositif de bac à fleurs est conçu de telle sorte que le fond du bac à terre se situe à une certaine distance du niveau d'eau ce qui, d'une part, permet une circulation d'air et une aération de la terre et, d'autre part, empêche la diffusion hors de cette dernière des nutriments ou analogues.

De manière avantageuse, la présence, au niveau du fond du bac à terre, d'une cheminée pourvue d'ouvertures, plus particulièrement positionnées à une certaine distance de ce fond, permet, d'une part, d'assurer une circulation d'air et, d'autre part, de définir un bac de rétention d'eau au niveau dudit bac à terre.

Un autre avantage consiste en ce que les moyens d'accrochage et les moyens d'accrochage complémentaires définissent des moyens aptes à maintenir le second bac à une certaine distance du niveau d'eau même lorsque le premier bac dudit dispositif est disposé sur un support ou à même le sol.

La présente invention sera mieux comprise à la lecture de la description qui va suivre se rapportant au dessin joint en annexe et dans lequel
La figure 1 est une vue schématisée, en coupe transversale et en éclaté, d'un dispositif de bac à fleurs selon l'invention ;
La figure 2 est une vue schématisée et en élévation du dispositif de bac à fleurs selon l'invention ;
La figure 3 est une vue schématisée, partielle et en détail, des moyens d'accrochage équipant le bord supérieur du bac à eau.

La présente invention concerne le domaine de la fabrication des dispositifs de bac à fleurs à réserve d'eau réalisés en un matériau synthétique et obtenu, plus particulièrement, par une technique de moulage ou analogue.

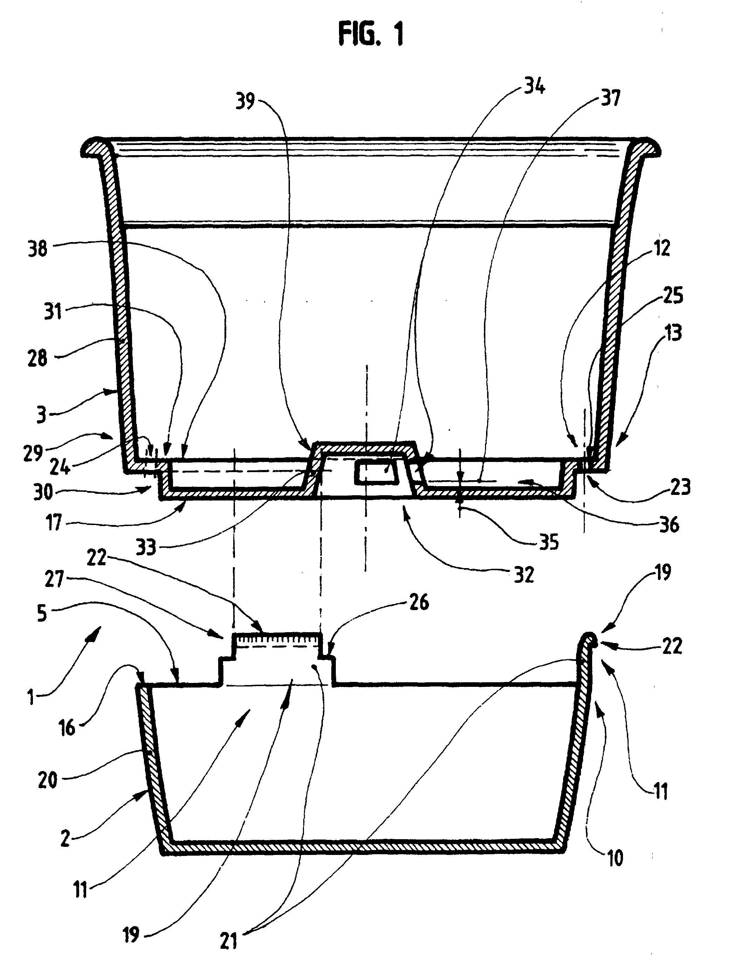

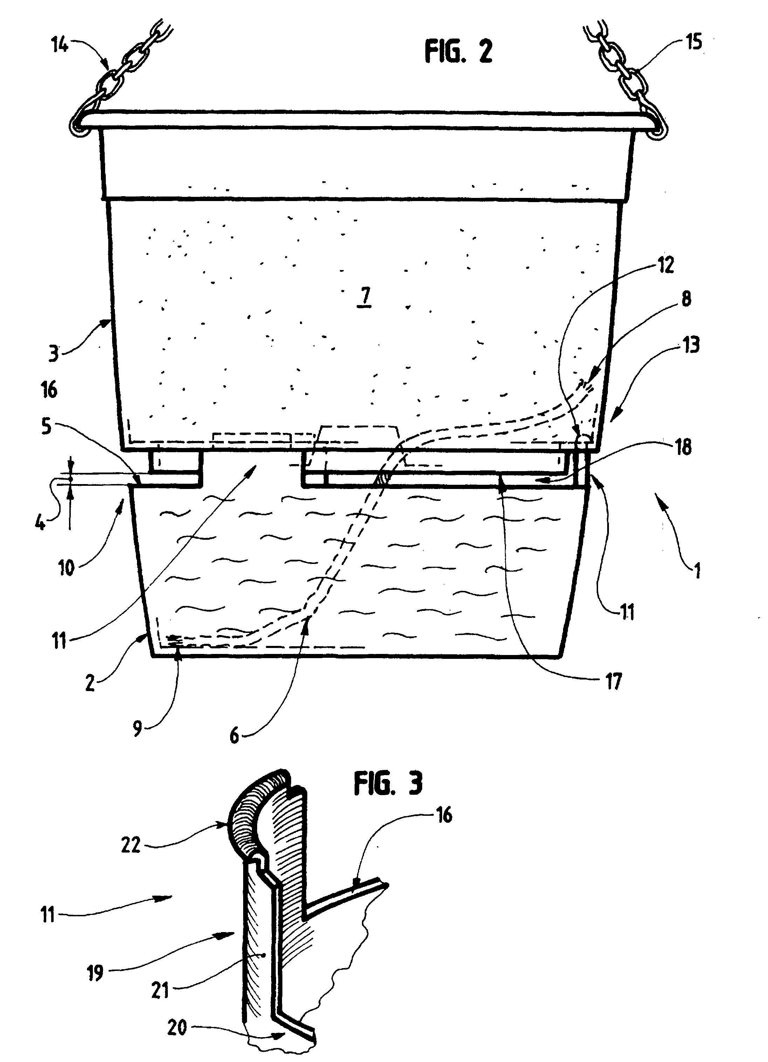

Tel que visible dans les figures 1 et 2 des dessins ci-joints, un tel dispositif de bac à fleurs 1 comporte au moins deux bacs 2, 3 dont le premier 2 est destiné à être rempli d'eau et sera désigné, par la suite, comme « bac à eau ». Le second bac 3 est destiné à être rempli de terre ce qui lui vaut, dans la suite de la description, l'appellation de « bac à terre ».

En fait, ce second bac 3 ou bac à terre 3 est disposé au-dessus et à une certaine distance 4 du niveau d'eau 5 du premier bac 2 ou bac à eau 2.

On remarquera qu'un tel dispositif 1 comporte, encore, au moins une mèche 6 s'étendant dans la terre 7 du bac à terre 3 par l'une 8 de ses extrémités, l'autre extrémité 9 de cette mèche 6 plongeant dans l'eau du premier bac 2.

Selon l'invention, ledit premier bac à eau 2 comporte, dans sa partie supérieure 10 orientée en direction du second bac 3, des moyens d'accrochage 11 destinés à coopérer avec des moyens d'accrochage complémentaires 12 que présente ledit second bac à terre 3, au niveau de sa partie inférieure 13.

Une telle coopération permet, tel que visible figure 2, de réaliser la suspension du premier bac à eau 2 en-dessous du second bac à terre 3.

Ce dernier peut être complété par des moyens de suspension 14, de type rigide ou autre, notamment sous forme de chaînettes 15, de tels moyens 14 permettant, en fait, de suspendre ledit dispositif de bac à fleurs 1 après un support, non représenté.

Tel qu'évoqué, ci-dessus, le second bac 3 est disposé à une certaine distance 4 du niveau d'eau 5 dans le premier bac 2. En fait, ce niveau d'eau 5 est défini par le bord supérieur 16 du bac à eau 2, ce bord supérieur 16 étant disposé à une certaine distance 4 du fond 17 du second bac à terre 3.

Ainsi et tel que visible figure 2, ce dispositif de bac à fleurs 1 permet de contrôler, aisément, la quantité d'eau dans le premier bac 2 et, le cas échéant, de procéder à son remplissage. Un tel dispositif 1, de par la distance 4 séparant le premier bac 2 du second 3, évite au fond 17 de ce dernier 3 de plonger dans l'eau et permet de définir, entre ledit fond 17 et le niveau d'eau 5, un canal 18 à l'intérieur duquel est susceptible de s'établir une circulation d'air.

Selon l'invention, le premier bac 2 comporte des moyens d'accrochage 11 qui, tel que visible plus particulièrement sur la figure 3, adoptent la forme d'au moins un crochet d'accrochage 19 équipant ledit bac à eau 2, notamment au niveau de son bord supérieur 16.

En fait, un tel crochet d'accrochage 19 se situe, sensiblement, dans le prolongement de la paroi latérale 20 du bac à eau 2 à partir de laquelle 20 ledit crochet d'accrochage 19 s'étend. Ce dernier 19 comporte une section 21 sensiblement droite s'étendant, par exemple, à partir dudit bord supérieur 16 et prolongée par une portion 22 recourbée vers l'extérieur dudit bac à eau 2.

Ces moyens d'accrochage 11 équipant ledit premier bac 2 sont conçus aptes à coopérer avec des moyens d'accrochage complémentaires 12 que présente le second bac à terre 3.

De tels moyens d'accrochage complémentaires 12 sont définis par au moins une lumière 23 ou analogue ménagée au niveau du bac à terre 3, plus particulièrement au niveau du fond 17 de ce dernier.

En ce qui concerne une telle lumière 23, celle-ci peut être définie, directement, lors de la fabrication du bac à terre 3, notamment par moulage.

Cependant et selon un mode de réalisation préféré, cette lumière 23 résulte d'un retrait de matière opéré au niveau du fond 17 du second bac 3 après fabrication de ce dernier.

Dans ce cas, une telle lumière 23 est définie par un opercule 24 ménagé au niveau du fond 17 du bac à terre 3, ledit opercule 24 étant de type escamotable.

A ce propos, on observera que cet opercule 24 correspond à une portion dudit fond 17 ayant été indexée, fragilisée et/ou prédécoupée en vue de faciliter un tel retrait de matière.

En particulier, au travers d'une telle indexation, il est possible de positionner exactement l'emplacement au niveau duquel, après moulage par exemple, il doit être pratiqué une lumière 23 à l'aide d'un outil approprié, notamment une scie, une meule, une fraise ou analogue.

En fragilisant une portion de ce fond 17, on définit un opercule 24 qu'il suffit de briser pour définir ladite lumière 23.

Le prédécoupage d'un opercule 24 peut, par exemple, être défini sous la forme de pointillés constituant une amorce de rupture dudit fond 17.

Une autre caractéristique de la présente invention consiste en ce que ladite lumière 23 présente une bordure 25 dont le coté externe, orienté en direction du bac à eau 2, est susceptible de coopérer avec une surface d'appui 26. Cette dernière est définie par un décrochement interne 27 que présente le crochet d'accrochage 19 au niveau de sa section sensiblement droite 21, à proximité de la portion recourbée 22. On observera qu'au travers d'une telle coopération, ledit bac à terre 3 est susceptible de venir reposer sur le bac à eau 2, ce dernier 2 étant posé, par exemple, à même le sol.

A ce propos, on observera que le décrochement interne 27 peut, avantageusement, être localisé, au niveau dudit crochet d'accrochage 19, en sorte que ledit bac à terre 3, lorsqu'il vient reposer sur ledit crochet 19 du bac à eau 2, se situe à une distance 4 du niveau d'eau 5 dans ce dernier 2.

Selon une autre caractéristique non représentée, le crochet d'accrochage 19 présente, au niveau de son extrémité supérieure, une portion effilée facilitant son introduction dans la lumière 23 des moyens d'accrochage complémentaires 12.

Ce crochet d'accrochage 19 peut, encore, être pourvu, à proximité de cette extrémité supérieure, d'un dispositif formant redan destiné à coopérer avec le coté interne de la bordure 25 de la lumière 23. Une telle coopération empêche le retrait dudit crochet d'accrochage 19 hors de cette lumière 23 et permet, par conséquent, de retenir le bac à eau 1 accroché sous le bac à terre 3.

Tel que visible plus particulièrement figure 1, le bac à terre 3 est délimité par une paroi latérale 28 s'étendant à partir du fond 17 et présentant, dans sa partie inférieure 29, un décrochement externe 30.

Ce dernier 30 définit, alors, un épaulement 31 sensiblement parallèle audit fond 17 et au niveau duquel sont ménagés les moyens d'accrochage complémentaires 12, plus particulièrement sous la forme desdites lumières 23.

Selon une autre caractéristique de la présente invention, le fond 17 du bac à terre 3 présente, encore, une cheminée 32 faisant saillie vers l'intérieur du second bac 3, ladite cheminée 32 étant délimitée par une paroi périphérique 33. Cette dernière 33, tel que visible dans la figure 1 est percée d'au moins une ouverture 34 destinée à permettre le passage de la mèche 6 apte à s'étendre à l'intérieur, d'une part, du bac à terre 3 et, d'autre part, du bac à eau 2.

A ce propos, on observera qu'une telle ouverture 34 est ménagée à une certaine hauteur 35 par rapport au fond 17 du bac à terre 3. Une telle configuration permet, avantageusement, de définir, un bac de rétention d'eau 36 au niveau de la partie inférieure 13 du second bac 3 tout en autorisant une circulation d'air pour l'aération de la terre 7 contenue dans ce dernier 3.

Selon un mode de réalisation préféré visible figure 1, de telles ouvertures 34 sont pratiquées à un niveau 37 inférieur à celui 38 de l'épaulement 31.

A l'instar des lumières 23 correspondant aux moyens d'accrochage complémentaires 12, lesdites ouvertures 34 peuvent être définies par une portion 39 de la paroi périphérique 33 correspondant à la cheminée 32, une telle portion 39 ayant été indexée, fragilisée et/ou prédécoupée.

## Revendications

1. Dispositif (1) de bac à fleurs à réserve d'eau comportant, d'une part, un premier bac (2) destiné à contenir de l'eau et, d'autre part, un second bac (3) destiné à contenir de la terre (7) et disposé au-dessus et à une certaine distance (4) du niveau d'eau (5) dans le premier bac (2), ce dernier (2) comportant, dans sa partie supérieure (10) orientée en direction du second bac (3), des moyens d'accrochage (11) destinés à coopérer avec des moyens d'accrochage complémentaires (12) que présente ledit second bac (3) au niveau de sa partie inférieure (13), tandis qu'une mèche (6) s'étend dans la terre (7) du second bac (3) par l'une de ses extrémités (8), l'autre extrémité (9) plongeant dans l'eau du premier bac (2), **caractérisé par le fait que** lesdits moyens d'accrochage (11) adoptent la forme d'au moins un crochet d'accrochage (19) équipant le premier bac (2), notamment au niveau de son bord supérieur (16), tandis que les moyens d'accrochage complémentaires (12) sont définis par au moins une lumière (23) ou analogue ménagée au niveau du fond (17) dudit second bac (3).

2. Dispositif de bac à fleurs (1) selon la revendication 1, **caractérisé par le fait que** le niveau d'eau (5) du premier bac (2) est défini par le bord supérieur (16) de ce dernier, ce bord supérieur (16) étant disposé à une certaine distance (4) du fond (17) du second bac (3).

3. Dispositif de bac à fleurs (1) selon l'une quelconque des revendications 1 ou 2, **caractérisé par le fait que** le crochet d'accrochage (19) est pourvu, à proximité de son extrémité supérieure, d'un dispositif formant redan destiné à coopérer avec le coté interne de la bordure (25) d'une lumière (23) en vue d'empêcher le retrait dudit crochet d'accrochage (19) hors de cette dernière (23).

4. Dispositif de bac à fleurs (1) selon l'une quelconque des revendications précédentes, **caractérisé par le fait que** ledit crochet d'accrochage (19) se situe, sensiblement, dans le prolongement de la paroi latérale (20) du bac à eau (2) à partir de laquelle il s'étend et comporte une section (21) sensiblement droite prolongée par une portion recourbée (22) vers l'extérieur du bac à eau (2).

5. Dispositif de bac à fleurs (1) selon la revendication 4, **caractérisé par le fait que** la section (21) sensiblement droite présente un décrochement interne (27) apte à définir une surface d'appui (26) destinée à coopérer avec le coté externe de la bordure (25) d'une lumière (23) en vue d'autoriser le bac à terre (3) à venir reposer sur le bac à eau (2).

6. Dispositif de bac à fleurs (1) selon l'une quelconque des revendications précédentes, **caractérisé par le fait que** ladite lumière (23) est définie, selon le cas, soit directement lors de la fabrication dudit bac à terre (3), soit par un opercule (24) ménagé au niveau du fond (17) du bac à terre (3), ledit opercule (24) étant de type escamotable et ayant été indexé, fragilisé et/ou prédécoupé.

7. Dispositif de bac à fleurs (1) selon l'une quelconque des revendications précédentes, **caractérisé par le fait que** ledit bac à terre (3) présente, au niveau de son fond (17), une cheminée (32) faisant saillie vers l'intérieur dudit bac à terre (3) et dont la paroi périphérique (33) est percée d'au moins une ouverture (34) pour le passage de la mèche (6).

8. Dispositif de bac à fleurs (1) selon la revendications 7, **caractérisé par le fait que** la ou les ouvertures (34) de ladite cheminée (32) sont pratiquées à une certaine hauteur (35) par rapport au fond (17) dudit bac à terre (3) de manière à définir, au niveau de ce dernier (3), un bac de rétention d'eau (36).

9. Dispositif de bac à fleurs (1) selon l'une quelconque des revendications précédentes, **caractérisé par le fait que** le bac à terre (3) est délimité par une paroi latérale (28), s'étendant à partir du fond (17) dudit second bac (3), et présentant, dans sa partie inférieure (29), un décrochement externe (30) apte à définir un épaulement (31) au niveau duquel sont ménagés les moyens d'accrochage complémentaires (12).

## Patentansprüche

1. Blumentopfeinrichtung (1) mit Wasservorrat, umfassend, einerseits, einen ersten Behälter (2), vorgesehen, Wasser zu enthalten, und, andererseits, einen zweiten Behälter (3), vorgesehen, Erde (7) zu enthalten, und angeordnet oberhalb und in einem gewissen Abstand (4) von dem Wasserstand (5) im ersten Behälter (2), wobei dieser Letztere (2) in seinem oberen Teil (10), der in Richtung auf den zweiten Behälter (3) gerichtet ist, Kupplungsmittel (11) umfaßt, vorgesehen, mit ergänzenden Kupplungsmitteln (12) zusammenzuwirken, die der besagte zweite Behälter (3) im Bereich seines unteren Teils (13) aufweist, während sich ein Docht (6) mit einem von seinen Enden (8) in die Erde des zweiten Behälters (3) erstreckt, wobei das andere Ende (9) im Wasser des ersten Behälters (2) getaucht ist, **dadurch gekennzeichnet, daß** die besagten Kupplungsmittel (11) wenigstens die Form von einem Kupplungshaken (19) annehmen, den der erste Behälter (2) nämlich im Bereich seines oberen Randes (16) aufweist, während die ergänzenden Kupplungsmittel (12) durch wenigstens eine Öffnung (23) oder dergleichen gebildet sind, der im Bereich des Bodens (17) des besagten zweiten Behälters (3) vorgesehen ist.

2. Blumentopfeinrichtung (1) nach Anspruch 1, **dadurch gekennzeichnet, daß** der Wasserstand (5) des ersten Behälters (2) durch den oberen Rand (16) dieses Letzteren definiert ist, wobei dieser obere Rand (16) in einem gewissen Abstand (4) von dem Boden (17) des zweiten Behälters (3) angeordnet ist.

3. Blumentopfeinrichtung (1) nach irgendeinem der Ansprüche 1 oder 2, **dadurch gekennzeichnet, daß** der Kupplungshaken (19) nahe bei seinem oberen Ende mit einer einen Absatz bildenden Vorrichtung ausgestattet ist, vorgesehen, mit der inneren Seite des Randes (25) einer Öffnung (23) zusammenzuwirken, um das Herausziehen des besagten Kupplungshakens (19) aus dieser letzteren (23) zu verhindern.

4. Blumentopfeinrichtung (1) nach irgendeinem der vorgehenden Ansprüche, **dadurch gekennzeichnet, daß** sich der besagte Kupplungshaken 19 im wesentlichen in der Verlängerung der Seitenwand (20) des Wasserbehälters (2) befindet, ab welcher er sich erstreckt und einen im wesentlichen geraden Abschnitt (21) umfaßt, der durch einen in Richtung auf die Außenseite des Wasserbehälters (2) abgebogenen Teil (22) verlängert ist.

5. Blumentopfeinrichtung (1) nach Anspruch 4, **dadurch gekennzeichnet, daß** der im wesentlichen gerade Abschnitt (21) einen inneren Absatz (27) aufweist, geeignet, eine Stützfläche (26) zu bilden, die vorgesehen ist, mit der Außenseite des Randes (25) einer Öffnung (23) zusammenzuwirken, um dem Behälter für Erde (3) zu erlauben, auf dem Wasserbehälter (2) zu ruhen.

6. Blumentopfeinrichtung (1) nach irgendeinem der vorgehenden Ansprüche, **dadurch gekennzeichnet, daß** die besagte Öffnung (23), je nach dem Fall, entweder direkt bei der Herstellung des besagten Behälters für Erde (3), oder durch einen Verschluß (24) gebildet ist, der im Bereich des Bodens (17) des Behälters für Erde (3) vorgesehen ist, wobei der besagte Verschluß (24) der Art einziehbar sei und indexiert, brüchig gemacht und/oder im voraus ausgeschnitten wurde.

7. Blumentopfeinrichtung (1) nach irgendeinem der vorgehenden Ansprüche, **dadurch gekennzeichnet, daß** der besagte Behälter für Erde (3) im Bereich seines Bodens (17) einen Schornstein (32) aufweist, der in Richtung auf das Innere des besagten Behälters für Erde (3) vorspringt und dessen Umkreiswand (33) mit wenigstens einer Öffnung (34) für den Durchgang des Dochts (6) durchbohrt ist.

8. Blumentopfeinrichtung (1) nach Anspruch 7, **dadurch gekennzeichnet, daß** die Öffnung oder die Öffnungen (34) des besagten Schornsteins (32) in einer gewissen Höhe (35) hinsichtlich des Bodens (17) des besagten Behälters für Erde (3) vorgesehen sind, um im Bereich dieses Letzteren (3) einen Staubehälter zum Halten von Wasser (36) zu bilden.

9. Blumentopfeinrichtung (1) nach irgendeinem der vorgehenden Ansprüche, **dadurch gekennzeichnet, daß** der Behälter für Erde (3) durch eine Seitenwand (28) abgegrenzt ist, die sich ab dem Boden (17) des besagten zweiten Behälters (3) erstreckt und in ihrem unteren Teil (29) einen äußeren Absatz (30) aufweist, geeignet, einen Ansatz (31) zu bilden, in dessen Bereich die ergänzenden Kupplungsmittel (12) vorgesehen sind.

## Claims

1. Plant container assembly (1) with water tank, including, on the one hand, a first trough (2) aimed at containing water and, on the other hand, a second trough (3) aimed at containing earth (7) and arranged above and at a determined distance (4) from the water level (5) in the first trough (2), the latter (2) including, in its upper portion (10) oriented towards the second trough (3), hooking-in means (11) aimed at co-operating with complementary hooking-in means (12) provided on the second trough (3) at the level of its lower portion (13), while a wick (6) extends with one of its ends (8) into the earth of the second trough (3), the other end (9) plunging into the water of the first trough (2), **characterised in that** said hooking-in means (11) adopt the form of at least one coupling hook (19) the first trough (2) is provided with, namely at the level of its upper edge (16), while the complementary hooking-in means (12) are defined by at least one opening (23) or the like provided for at the level of the bottom (17) of said second trough (3).

2. Plant container assembly (1) according to claim 1, **characterised in that** the water level (5) of the first trough (2) is defined by the upper edge (16) of the latter, this upper edge (16) being arranged at a determined distance (4) from the bottom (17) of the second trough (3).

3. Plant container assembly (1) according to any of claims 1 or 2, **characterised in that** the coupling hook (19) is provided, close to its upper end, with a device forming a step aimed at co-operating with the inner surface of the edge (25) of an opening (23), with a view to impeding said coupling hook (19) from withdrawing from the latter (23).

4. Plant container assembly (1) according to any of the preceding claims, **characterised in that** said coupling hook (19) is located substantially in the extension of the side wall (20) of the water trough (2) from which it extends and includes a substantially straight section (21) extended by a portion (22) curved towards the outside of the water trough (2).

5. Plant container assembly (1) according to claim 4, **characterised in that** the substantially straight section (21) has an internal set-back (27) capable of defining a resting surface (26) aimed at co-operating with the outer surface of the edge (25) of an opening (23), in order to allow the earth trough (3) to rest on the water trough (2).

6. Plant container assembly (1) according to any of the preceding claims, **characterised in that** said opening (23) is defined, as the case may be, either directly during the manufacture of said earth trough (3) or by a cover (24) provided for at the level of the bottom (17) of the earth trough (3), said cover (24) being of the withdrawable type and having been indexed, weakened and/or previously cut out.

7. Plant container assembly (1) according to any of the preceding claims, **characterised in that** said earth trough (3) has, at the level of its bottom (17), a chimney (32) protruding towards the inside of said earth trough (3) and the peripheral wall (33) of which is perforated with at least one opening (34) for the passing through of the wick (6).

8. Plant container assembly (1) according to claim 7, **characterised in that** the opening or openings (34) of said chimney (32) are provided for at a determined height (35) with respect to the bottom (17) of said earth trough (3), so as to define, at the level of the latter (3), a water contention trough (36).

9. Plant container assembly (1) according to any of the preceding claims, **characterised in that** the earth trough (3) is delimited by a side wall (28) extending from the bottom (17) of said second trough (3) and having, in its lower portion (29), an external set-back (30) capable of defining a shoulder (31) at the level of which are provided the complementary hooking-in means (12).
